Europäisches Patentamt

(19) European Patent Office

Office européen des brevets

(11) Numéro de publication: **0 141 696**
**B1**

(12) **FASCICULE DE BREVET EUROPEEN**

(45) Date de publication du fascicule du brevet:
**17.11.88**

(51) Int. Cl.⁴: **C 01 G 23/00**, C 04 B 35/46

(21) Numéro de dépôt: **84401760.8**

(22) Date de dépôt: **05.09.84**

(54) **Procédé de préparation de titanates d'alcalino-terreux.**

(30) Priorité: **14.09.83 FR 8314618**

(43) Date de publication de la demande:
**15.05.85 Bulletin 85/20**

(45) Mention de la délivrance du brevet:
**17.11.88 Bulletin 88/46**

(84) Etats contractants désignés:
**AT BE CH DE FR GB IT LI LU NL SE**

(56) Documents cités:
**US - A - 3 577 487**

**CHEMICAL ABSTRACTS, vol. 82, no. 12, 24 mars 1975, page 124, no. 75095m, Columbus, Ohio, USA; & JP - A - 73 92300 (JAPAN ATOMIC ENERGY RESEARCH INSTITUTE) 30-11-1973**
**CHEMICAL ABSTRACTS, vol. 97, no. 20, novembre 1982, page 733, no. 173553p, Columbus, Ohio, USA; & JP - A - 82 88030 (MATSUSHITA ELECTRIC INDUSTRIAL CO., LTD.) 01-06-1982**
**CHEMICAL ABSTRACTS, vol. 80, no. 16, 22 avril 1974, page 133, no. 85300x, Columbus, Ohio, USA; & JP - A - 73 66600 (JAPAN ATOMIC ENERGY RESEARCH INSTITUTE) 12-09-1973**

(73) Titulaire: **RHONE-POULENC CHIMIE, 25, quai Paul Doumer, F-92408 Courbevoie Cédex (FR)**

(72) Inventeur: **Browaeys, Jean-Philippe, 23, rue des Trois Frères, F-75018 Paris (FR)**
Inventeur: **Colombet, Jean-François, 17, Boulevard Richelieu, F-92500 Rueil Malmaison (FR)**
Inventeur: **Dougier, Patrick, 8, Manoir de Denouval, F-78470 Andresy (FR)**
Inventeur: **Magnier, Claude, 3, rue des Chaufourniers, F-75019 Paris (FR)**
Inventeur: **Poisson, Régis, 17, avenue de la Cigale, F-92600 Asnières (FR)**

(74) Mandataire: **Cazes, Jean-Marie et al, RHONE-POULENC INTERSERVICES Service Brevets Chimie 25, quai Paul Doumer, F-92408 Courbevoie Cédex (FR)**

## Description

L'invention concerne un procédé de préparation d'une poudre fine de titanate d'alcalino-terreux.

Les titanates d'alcalino-terreux et en particulier le titanate de baryum sont des matériaux très utilisés dans la préparation de compositions céramiques.

On connaît différentes méthodes de préparation du titanate de baryum. En particulier, il est préparé par chamottage entre un sel de baryum contenant un anion volatil, le carbonate de baryum par exemple, et de l'oxyde de titane (Chemical Abstracts 20, 166 870 g). Dans ce cas, la réaction a lieu à des températures comprises entre 1000 et 1400 °C ce qui conduit à des températures de fin de frittage, lors de la préparation des formules diélectriques, supérieures à 1350 °C.

Un tel procédé présente plusieurs inconvénients.

Tout d'abord, la nécessité de conduire la réaction et le frittage à des températures élevées entraîne une consommation d'énergie importante.

Par ailleurs, on sait que dans la fabrication d'une composition diélectrique, outre le titanate de baryum, on utilise des matériaux qui servent à assurer le contact entre les différentes couches de titanate formant le diélectrique. Or, compte tenu de ce que la réaction de frittage a lieu à haute température, il est nécessaire d'utiliser des matériaux pouvant tenir dans ces conditions et donc présentant des points de fusion élevés. On est donc amené, par exemple dans le cas des condensateurs, à choisir des métaux précieux tels que l'argent, le platine et le palladium par exemple.

On connaît enfin par le brevet US 3 577 487 un procédé de fabrication de titanate de baryum à partir d'un gel de titane et d'une solution de nitrate de baryum, mais ce procédé présente de nombreux inconvénients à l'échelle d'une production industrielle.

D'une part un gel est un produit amorphe présentant la propriété fâcheuse de retenir l'eau. Ceci entraîne que l'élimination des ions chlorures qui ont été introduits par le précurseur du titane (TiCl$_4$) lors de la fabrication du gel ne se fera que très difficilement et de manière incomplète.

D'autre part, le mélange homogène entre la phase gel et le sel de baryum ne peut être obtenu que sous agitation énergique et prolongé, généralement suivie d'une étape de mûrissement, le mélange se présentant alors sous la forme d'une pâte visqueuse peu facile à mettre en œuvre.

Enfin, réaliser des prélèvements représentatifs à partir d'un gel est chose peu aisée et délicate, ce qui rend difficile un contrôle rigoureux du rapport Ba/Ti en cours de fabrication, et donc douteuse la constance de la qualité du produit obtenu.

Le but de l'invention est de fournir un titanate d'alcalino-terreux pouvant fritter à basse température c'est-à-dire présentant une température de fin de frittage mesurée par dilatométrie (chauffage 5 °C/mn) inférieure à 1350 °C et permettant de réaliser ainsi des économies importantes en énergie et en matière première.

Un autre but visé par la présente invention est de fournir un titanate d'alcalino-terreux frittant rapidement, c'est-à-dire dont la densité mesurée après chauffage 2 heures à 1300 °C soit supérieure ou égale à 95% de la densité théorique du titanate désiré. Le frittage rapide permet de réaliser d'importantes économies d'énergie et d'obtenir une excellente productivité.

La présente invention permet également d'obtenir une poudre très fine de titanate d'alcalino-terreux et qui est obtenue avec une excellente reproductibilité. Cette poudre, qui est uniformément stoechiométrique au niveau microscopique, est particulièrement adaptée à la fabrication de produits céramiques en association avec d'autres composés par réaction à l'état solide.

Ces objectifs sont atteints par le procédé de préparation de la poudre fine de titanate d'alcalino-terreux selon l'invention qui est caractérisé en ce qu'il comporte les étapes suivantes:

- on mélange d'une part un sol de titane présentant un pH compris entre 0,8 et 2,5 et constitué de cristallites élémentaires de TiO$_2$ de tailles comprises entre 10 et 100 Å, agglomérés en amas submicroniques ayant des tailles de 200 à 1000 Å et d'autre part une solution d'un nitrate d'alcalino-terreux;

- on opère ensuite le séchage de la suspension obtenue en injectant ladite suspension suivant une trajectoire confondue avec l'axe de symétrie des trajectoires hélicoïdales et puits-tourbillons des gaz assurant le séchage, le temps de séjour des particules dans le réacteur étant inférieure à $^1/_{10}$ de seconde, la température d'entrée des gaz étant comprise entre 400 et 700 °C et la température du solide séché comprise entre 120 et 160 °C

- on calcine le produit séché à une température comprise entre 700 et 1300 °C pendant un temps compris entre 30 mn et 24 h et sous une pression partielle de NO$_x$ décroissante de 1,013 à 0 bar;

- on opère éventuellement le broyage de la poudre obtenue.

Le sol de titane présentant un pH entre 0,8 et 2,5 et de préférence entre 1,8 et 2,2 et constitué de cristallites élémentaires de TiO$_2$ de tailles comprises entre 10 et 100 Å, agglomérés en amas submicroniques ayant des tailles de 200 à 1000 Å peut être obtenu par toute technique appropriée et en particulier par peptisation d'un gel de dioxyde de titane ayant les mêmes tailles de cristallites élémentaires que le sol désiré mais comportant des amas macroscopiques de l'ordre du micron.

Selon un mode de mise en œuvre préféré de l'invention, on peptise de préférence un gel de dioxyde de titane dont les cristallites élémentaires ont une taille de l'ordre de 50 Å agglomérés en amas submicroniques de 400 Å environ et contenant éventuellement des amas macroscopiques de l'ordre du micron. Ce gel est obtenu de préférence lors du procédé classique de préparation du dioxyde de titane par attaque sulfurique de l'illmenite; sa teneur en ions sulfate est comprise entre 3 et 15% et de préférence entre 6 et 8% et son acidité est telle que le pH de la suspension aqueuse (300 g/l exprimé en $TiO_2$) est compris entre 1 et 3.

Le gel peptisé qui est composé essentiellement d'eau et de $TiO_2$, ne doit pas présenter une concentration en $TiO_2$ trop faible, car une teneur en eau trop importante rendrait plus difficile et plus long le séchage du sol obtenu ultérieurement dans la suite du procédé. Par contre, il s'avère qu'une teneur en $TiO_2$ trop élevée peut aussi gêner le bon déroulement du procédé. De préférence, on partira d'un gel peptisé ayant une teneur en poids en $TiO_2$ de 5 à 35% et selon un mode de réalisation particulier de l'invention on utilisera un gel peptisé ayant une teneur en $TiO_2$ de 15%.

Selon le procédé de l'invention, on mélange ensuite au sol ou à la suspension obtenue par peptisation du gel une solution soluble dans l'eau d'un nitrate d'alcalino-terreux. L'alcalino-terreux est de préférence le baryum, le strontium ou le calcium qui sont utilisés comme élément alcalino-terreux de base dans les compositions diélectriques pour condensateurs ou résistances.

Un paramètre important lors de l'addition du nitrate d'alcalino-terreux est le rapport atomique M/Ti (M représentant le métal alcalino-terreux). On a observé en effet que l'aptitude au frittage du titanate obtenu par le procédé de l'invention dépend notamment de ce rapport.

Il a été observé que, pour des valeurs du rapport atomique $\frac{M}{Ti}$ inférieures à 0,96 et supérieures à 1,05 on n'obtenait pas une densification adéquate de la poudre de titanate d'alcalino-terreux.

Par contre, pour des valeurs du rapport $\frac{M}{Ti}$ comprises entre 0,96 et 1,05 la densité mesurée à 1300°C après chauffage pendant 2 heures de la poudre de titanate d'alcalino-terreux est bien supérieure ou égale à 95%. Toutefois, dans cette dernière fourchette, on préfère opérer avec un rapport $\frac{M}{Ti}$ compris entre 0,96 et 1 pour obtenir une température de fin de frittage (mesurée par dilatométrie (chauffage 5°C/mn) la plus basse possible. En effet, avec un rapport compris entre 1 et 1,05 la température de fin de frittage du titanate d'alcalino-terreux peut être égale à 1350°C mesurée par dilatométrie (chauffage 5°C/mn) ou même légèrement dépasser cette valeur.

A l'issue de l'étape d'introduction de la solution du nitrate d'alcalino-terreux, on obtient une suspension parfaitement homogène du titane dans la solution d'alcalino-terreux.

La suspension ainsi obtenue contient environ 5 à 15% de matière sèche. Elle doit ensuite être séchée.

On réalise ce séchage dans un réacteur «flash», par exemple du type mis au point par la Demanderesse et décrit notamment dans les brevets français No 2 257 326, 2 419 754, 2 431 321. Dans ce cas, les gaz sont animés d'un mouvement hélicoïdal et s'écoulent dans un puits-tourbillon. La suspension est injectée suivant une trajectoire confondue avec l'axe de symétrie des trajectoires hélicoïdales des gaz ce qui permet de transférer parfaitement la quantité de mouvement des gaz aux particules de cette suspension. Par ailleurs, le temps de séjour des particules dans le réacteur est extrêmement faible, il est inférieur à $^1/_{10}$ de seconde, ce qui supprime tout risque de surchauffe par suite d'un contact trop long avec les gaz.

Selon les débits respectifs des gaz de la suspension, la température d'entrée des gaz est comprise entre 400 et 700°C, la température du solide séché entre 120 et 160°C.

On obtient un produit sec présentant une granulométrie de l'ordre de quelques microns, comprise entre 1 et 10 microns par exemple.

Le produit sec est ensuite calciné.

La calcination est opérée à une température comprise entre 700 et 1300°C et de préférence entre 1000 et 1150°C. La durée de la calcination peut varier entre 30 minutes et 24 heures par exemple et de préférence de 6 à 15 heures.

Selon l'invention la calcination est conduite sous atmosphère d'oxyde d'azote $NO_x$ ($1 < x < 2$) telle que la pression partielle de $NO_x$ décroisse lors de la calcination de 1,013 à 0 bar. Selon un mode de mise en œuvre plus particulièrement préféré, on opère la calcination sous atmosphère de $NO_x$ et d'air de telle façon que la pression partielle de $NO_x$ décroisse au cours de la calcination de 1,013 à 0 en opérant un balayage progressif d'air pendant environ 10 à 30 mn lorsque l'on a atteint la température désirée de calcination.

A la suite de cette calcination, on obtient une poudre de titanate d'alcalino-terreux présentant une granulométrie macroscopique de 1 à 10 microns environ, les grains de 1 à 10 µm étant constitués de cristallites élémentaires ou d'amas submicroniques de taille de 500 Å à 8000 Å environ.

Les produits obtenus à une température de calcination inférieure à environ 1050°C peuvent être directement utilisables pour la fabrication de formules diélectriques. Par contre les produits obtenus à une température de calcination supérieure ou égale à environ 1050°C doivent généralement être broyés pour obtenir des poudres utilisables constituées de cristallites élémentaires d'une dispersion comprise entre 2000 et 8000 Å et de préférence entre 2000 et 3000 Å. La répartition granulométrique de la poudre se situe alors entre environ 0,5 et 3 microns.

L'évolution de la température et du temps de calcination corrélé avec la dimension des particules permet de dégager les tendances suivantes: plus la température de calcination est basse, plus il est nécessaire d'augmenter le temps de calcination; plus la température de calcination est élevée, plus le temps peut diminuer.

Les caractéristiques de la poudre de titanate d'alcalino-terreux sont déterminées de la façon suivante:

On mélange la poudre de titanate d'alcalino-terreux avec un liant en proportion pondérale de 2%, ce liant étant choisi parmi les liants bien connus dans la technique, par exemple le Rhodoviol 4/20®.

Le mélange est pastillé, sous une pression de 1960 bars. On procède au frittage. Le frittage débute généralement vers 800 °C environ. On fait une mesure dilatométrique et la température dite «de fin de frittage» retenue est celle mesurée à la fin du retrait mécanique.

Les poudres de titanate d'alcalino-terreux obtenues selon l'invention possèdent des propriétés particulièrement intéressantes. En effet leur température de fin de frittage (mesurée par dilatométrie (chauffage 5 °C/mn) est inférieure à 1350 °C, elles frittent donc à basse température mais de plus elles frittent très rapidement puisque leur densité mesurée à 1300 °C après chauffage pendant 2 heures est supérieure ou égale à 95% de la densité théorique du titanate d'alcalino-terreux considéré.

Les poudres de titanate d'alcalino-terreux selon l'invention sont utilisables dans la fabrication des condensateurs et des résistances selon les procédés et dans les formulations connues dans ces domaines.

D'autres avantages et aspects de l'invention apparaîtront à la lecture des exemples qui suivent.

Exemple 1

On part de 1066 g d'un sol de titane à 15% en poids en $TiO_2$. Le pH de la suspension est de 2. La suspension obtenue est constituée d'amas submicroniques d'environ 400 Å formés de cristallites élémentaires d'environ 50 Å.

On mélange ensuite le «sol» de titane à 6534 g d'une solution de $Ba(NO_3)_2$ à 8% en poids de $Ba(NO_3)_2$ (rapport Ba/Ti = 1).

Après homogénéisation par agitation durant 15 mn, le mélange est séché par atomisation.

Le séchage a lieu dans le réacteur «flash» décrit dans les brevets français no 2 257 326, 2 419 754 et 2 431 321. La température d'entrée des gaz est de 550 °C, la température de séchage de 150 °C.

On obtient alors 718 g de produit séché. Il est constitué d'agglomérats sphériques de granulométrie comprise entre 1 et 10 μ.

Le produit séché est calciné à 1150 °C durant 6 heures. La vitesse de montée en température est de 9 °C par minute. L'atmosphère de calcination $NO_x$ est progressivement éliminée par balayage à l'air à partir du palier en température (temps d'élimination du $NO_x$ : 20 mn).

On obtient alors 466 g de $BaTiO_3$.

Ce titanate de baryum obtenu est broyé.

La réparation granulométrique (coulter) est alors comprise entre 0,5 et 3 μ.

La taille des cristallites élémentaires se situe entre 2000 et 5000 Å.

Le frittage du titanate de baryum s'effectue après pastillage à sec sous une pression de 1960 bars. Le frittage démarre aux alentours de 700 °C pour se terminer à 1270 °C (montée en T : 5 °C/ mn). La densité après frittage à 1300 °C durant 2 heures est égale à 96% de la densité théorique.

Exemple 2

Le deuxième essai consiste à calciner le produit séché décrit dans l'exemple 1 à 1050 °C durant 6 heures. La vitesse de montée en température et l'atmosphère réactionnelle sont identiques.

Le produit calciné est broyé puis pastillé dans les mêmes conditions. Le frittage démare aux alentours de 700 °C pour se terminer à 1240 °C. La densité après frittage à 1300 °C durant 2 heures est égale à 96% de la densité théorique.

Exemple 3

Les conditions de préparation du produit séché sont identiques à celles de l'exemple 1, excepté au niveau de la quantité de la solution de nitrate de baryum.

On mélange ainsi au «sol» de titane (quantité de l'exemple 1) une solution de 6272,6 g de $Ba(NO_3)_2$ à 8% en $Ba(NO_3)_2$ (rapport Ba/Ti = 0,96).

Les conditions de calcination de broyage et de frittage sont identiques à celles de l'exemple 2.

Le frittage démarre aux alentours de 800 °C pour se terminer à 1240 °C.

La densité après frittage à 1300 °C durant 2 heures est égale à 95% de la densité théorique.

Exemple 4

Les conditions de préparation du produit séché sont identiques à celles de l'exemple 1, excepté au niveau de la quantité de la solution de nitrate de baryum.

On mélange ainsi au «sol» de titane (quantité de l'exemple 1) une solution de 6664,68 g de $Ba(NO_3)_2$ à 8% en $Ba(NO_3)_2$ (rapport Ba/Ti = 1,02).

Les conditions de calcination de broyage et de frittage sont identiques à celles de l'exemple 2.

Le frittage démarre aux alentours de 700 °C pour se terminer à 1350 °C.

La densité après frittage à 1300 °C durant 2 heures est égale à 97% de la densité théorique.

**Revendications**

1. Procédé de fabrication d'une poudre fine de titanate d'alcalino-terreux caractérisé en ce qu'il comporte les étapes suivantes:
- on mélange d'une part un sol de titane présentant un pH compris entre 0,8 et 2,5 et constitué de cristallites élémentaires de $TiO_2$ de tailles comprises entre 10 et 100 Å, agglomérés en amas submicroniques ayant des tailles de 200 à 1000 Å et d'autre part une solution d'un nitrate d'alcalino-terreux;
- on opère ensuite le séchage de la suspension obtenue en injectant ladite suspension suivant une trajectoire confondue avec l'axe de symétrie des trajectoires hélicoïdales et puits-tourbillons des gaz assurant le séchage, le temps de séjour des particules dans le réacteur étant inférieur à $1/10$ de seconde, la température d'entrée des gaz étant comprise entre 400 et 700 °C et la température de solide séché comprise entre 120 et 160 °C

– on calcine le produit séché à une température comprise entre 700 et 1300 °C pendant un temps compris entre 30 mn et 24 h et sous une pression partielle de $NO_x$ décroissante de 1,013 à 0 bar;

– on opère éventuellement le broyage de la poudre obtenue.

2. Procédé selon la revendication 1, caractérisé en ce que le rapport atomique du métal alcalino-terreux au titane mis en œuvre lors du mélange de la première étape est compris entre 0,96 et 1,05 et de préférence entre 0,96 et 1.

3. Procédé selon la revendication 1, caractérisé en ce que, lors de la calcination, on opère la décroissance de la pression partielle d'$NO_x$ en réalisant un balayage progressif d'air.

## Claims

1. Process for the manufacture of a fine powder of alkaline-earth metal titanate, characterised in that it contains the following stages:

– a titanium sol, on the one hand, having a pH between 0.8 and 2.5 and consisting of elementary crystallites of $TiO_2$ of sizes between 10 and 100 Å, agglomerated into submicronic masses of sizes from 200 to 1000 Å, is mixed with, on the other hand, a solution of an alkaline-earth metal nitrate;

– drying of the suspension obtained is then carried out by injection the said suspension along a trajectory coincident with the axis of symmetry of the helical trajectories and vortex wells of the gases providing the drying, the residence time of the particles in the reactor being less than $1/10$ of a second, the entry temperature of the gases being between 400 and 700 °C and the temperature of the dried solid between 120 and 160 °C;

– the dried product is calcined at a temperature between 700 and 1300 °C for a period of between 30 min and 24 h, and under a partial pressure of $NO_x$ decreasing from 1.013 to 0 bar;

– grinding of the powder obtained is optionally carried out.

2. Process according to claim 1, characterised in that the atomic ratio of the alkaline-earth metal to the titanium used during the mixing in the first stage is between 0.96 and 1.05 and preferably between 0.96 and 1.

3. Process according to claim 1, characterised in that, during the calcination, the lowering of the partial pressure of $NO_x$ is performed by carrying out a gradual flushing with air.

## Patentansprüche

1. Verfahren zur Herstellung eines feinen Pulvers von Erdalkalititanat, dadurch gekennzeichnet, dass es die folgenden Schritte enthält:

– man vermischt ein Titandioxidsol mit einem pH-Wert zwischen 0,8 und 2,5, das aus Elementarkristalliten von $TiO_2$ mit Grössen zwischen 10 und 100 Å besteht, die zu Submikron-Häufchen von 200 bis 1000 Å zusammengeballt sind, einerseits, mit einer Lösung eines Erdalkalinitrats andererseits;

– danach wird die erhaltene Suspension getrocknet, indem man sie entsprechend einer Bahn einspritzt, die mit der Symmetrieachse der Schrauben- und Wirbelschachtbahnen der die Trocknung gewährleistenden Gase zusammenfällt, wobei die Verweilzeit der Teilchen im Reaktor kleiner als $1/10$ Sekunde ist, die Eintrittstemperatur der Gase zwischen 400 und 700 °C liegt und die Temperatur des getrockneten Feststoffs zwischen 120 und 160 °C liegt;

– das getrocknete Produkt wird bei einer Temperatur zwischen 700 und 1300 °C während einer Zeit zwischen 30 min und 24 h und unter einem von 1,013 auf 0 bar abnehmenden Partialdruck von $NO_x$ kalziniert;

– gegebenenfalls wird das erhaltene Pulver gemahlen.

2. Verfahren nach Patentanspruch 1, dadurch gekennzeichnet, dass das beim Mischen in der ersten Stufe eingesetzte Molverhältnis von Erdalkalimetall zu Titan zwischen 0,96 und 1,05 und vorzugsweise zwischen 0,96 und 1 liegt.

3. Verfahren nach Patentanspruch 1, dadurch gekennzeichnet, dass die Abnahme des Partialdrucks von $NO_x$ bei der Kalzination durch eine zunehmende Luftspülung erfolgt.